# EUROPEAN PATENT APPLICATION

(11) **EP 4 589 425 A1**
(43) Date of publication of application: **23.07.2025**
(21) Application number: 24164222.2
(22) Date of filing: 18.03.2024
(51) Int. Cl.: G06F 9/4401, G06F 3/06

(54) **METHODS FOR REDUCING BOOT TIME OF STORAGE DEVICES**

(30) Priority: 19.01.2024 IN 202441003885
(71) Applicant: Samsung Electronics Co., Ltd., Suwon-si, Gyeonggi-do 16677 (KR)
(72) Inventor: SAGAR RAMACHANDRA, Pradeep, 560048 Bengaluru, Karnataka (IN); VEERASAMY, Mohan Raj, 560048 Bengaluru, Karnataka (IN)
(74) Representative: Kuhnen & Wacker Patent- und Rechtsanwaltsbüro PartG mbB

(57) **Abstract**

There is provided a method for reducing boot time of a storage device including receiving a unique identity as a part of establishing a transport connection between the storage device and a host device, determining whether the unique identity matches with a pre-configured unique identity and upon determining that the received unique identity matches with the pre-configured unique identity, reloading configuration data, corresponding to one or more configuration operations defined in a boot sequence, from a configuration file stored in a memory of the storage device.

## Description

### BACKGROUND

### 1. Field

Embodiments of the disclosure generally relate to a storage device, and in particular, relates to a method for reducing boot time of the storage device..

### 2. Description of Related Art

Recently, Solid State Drive (SSD) devices are widely used as storage devices due to many advantages (e.g., speed, power consumption, etc.) offered by these devices. Many of the SSD devices have adopted Non-Volatile Memory Express (NVMe) interface protocol that offers considerably higher read/write speeds, compared to legacy interface protocols (e.g., Serial Advanced Technology Attachment (SATA) interface protocol which is used in legacy SSD devices). In a case in which NVMe is used to access a non-volatile storage included in an SSD device, the SSD device may be referred to as an NVMe SSD device.

Typically, boot time or initialization time of an SSD device (whether during system boot or after a system reset/restart) plays an important role in determining importance of the SSD device. The boot time may be defined as the time taken by the SSD device to become fully functional after a system boot or reset. In various applications and environments (e.g., in computing devices, data centers, etc.), SSD devices that exhibit shorter boot times are preferred over SSD devices that exhibit longer boot times because an SSD device with shorter boot time becoming operational more quickly, and hence can promptly engage in data read-write operations. Thus, there is a need for improvements in the storage devices. For example, there is a need for reducing boot time of SSD devices.

### SUMMARY

One or more problems and/or shortcomings in the related art discussed above may be overcome and additional advantages may be provided by the disclosure. According to an aspect of the disclosure, apparatuses, methods/operational procedures, systems, and computer readable media are provided for reducing boot time of storage devices.

According to an aspect of the disclosure, there is provided a method for booting a storage device including receiving first identity information as part of a procedure for establishing a transport connection between the storage device and a host device, the first identity information corresponding to an association of the storage device with the host device, determining whether the first identity information matches second identity information stored in a memory of the storage device and based on the first identity information matching the second identify information, loading, from a configuration file related to the second identity information stored in the memory of the storage device, configuration data corresponding to one or more configuration operations related to a boot sequence, wherein the boot sequence comprises a plurality of configuration operations for booting the storage device.

According to another aspect of the disclosure, there is provided a storage device including: a memory; and a controller communicatively coupled with the memory and configured to: receive first identity information as part of a procedure for establishing a transport connection between the storage device and a host devi30ce, the first identity information corresponding to an association of the storage device with the host device; determine whether the first identity information matches second identity information stored in a memory of the storage device; and based on the first identity information matching the second identify information, load, from a configuration file related to the second identity information stored in the memory of the storage device, configuration data corresponding to one or more configuration operations related to a boot sequence, wherein the boot sequence comprises a plurality of configuration operations for booting the storage device.

According to another aspect of the disclosure, there is provided a method for booting a storage device including: establishing a transport connection between the storage device and a host device; reading a capability register of the storage device to determine whether the storage device supports fast booting; based on determining that the storage device supports the fast booting, generating first identity information corresponding to an association of the storage device with the host device and communicating the first identity information to the storage device; and upon expiry of a timer, reading a status register of the storage device to determine whether the storage device has loaded configuration data from a configuration file related to the first identity information, the configuration data corresponding to one or more configuration operations related to a boot sequence, wherein the boot sequence comprises a plurality of configuration operations for booting the storage device.

According to another aspect of the disclosure, there is provided a host device for booting a storage device, the host device including: a memory; and at least one controller communicatively coupled with the memory and configured to: establish a transport connection between the storage device and the host device; read a capability register of the storage device to determine whether the storage device supports fast booting; based on determining that the storage device supports the fast booting, generate first identity information corresponding to an association of the storage device with the host device and communicating the first identity information to the storage device; and upon expiry of a timer, read reading a status register of the storage device to determine whether the storage device has loaded configuration data from a configuration file related to the first identity information, the configuration data corresponding to one or more configuration operations related to a boot sequence, wherein the boot sequence comprises a plurality of configuration operations for booting the storage device.

### BRIEF DESCRIPTION OF DRAWINGS

The embodiments of the disclosure are illustrated in the accompanying drawings, throughout which like reference letters indicate corresponding parts in the various figures. The embodiments herein will be better understood from the following description with reference to the drawings, in which:
FIG. 1 illustrates a high level block diagram of a storage system according to an embodiment of the disclosure.
FIG. 2 illustrates a more detailed block diagram of a storage system including components of a host device and a storage device according to an embodiment of the disclosure.
FIG. 3 illustrates a method of reducing boot time of a storage device according to an exemplary embodiment of the disclosure.
FIG. 4 illustrates a flow chart of a method of reducing boot time of a storage device according to embodiment of the disclosure.
FIG. 5 illustrates a flow chart of another method of reducing boot time of a storage device according to embodiment of the disclosure.

### DETAILED DESCRIPTION

Hereinafter, various embodiments will be described in detail with reference to the accompanying drawings.

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween. Likewise, similar expressions, for example, "between" and "immediately between," and "adjacent to" and "immediately adjacent to," are also to be construed in the same way. As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof. As used herein, an expression "at least one of" preceding a list of elements modifies the entire list of the elements and does not modify the individual elements of the list. For example, an expression, "at least one of a, b, and c" should be understood as including only a, only b, only c, both a and b, both a and c, both b and c, or all of a, b, and c.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment (e.g., as to what an example or embodiment may include or implement) means that at least one example or embodiment exists where such a feature is included or implemented, while all example embodiments are not limited thereto.

The embodiments of the disclosure are example embodiments, and thus, the disclosure is not limited thereto and may be realized in various other forms. As is traditional in the field, embodiments may be described and illustrated in terms of blocks, as shown in the drawings, which carry out a described function or functions. These blocks, which may be referred to herein as units or modules or the like, or by names such as device, logic, circuit, counter, comparator, generator, converter, or the like, may be physically implemented by analog and/or digital circuits including one or more of a logic gate, an integrated circuit, a microprocessor, a microcontroller, a memory circuit, a passive electronic component, an active electronic component, an optical component, and the like, and may also be implemented by or driven by software and/or firmware (configured to perform the functions or operations described herein).

The terms such as "Solid State Drive," "SSD," and "SSD device" may be used interchangeably throughout the disclosure. Further, the terms such as "host" and "host device" may be used interchangeably throughout the disclosure. The terms such as "controller" and "processor" may be used interchangeably throughout the disclosure. For example, a controller and/or a processor may be implemented by hardware electronic components. The terms such as "initialization sequence" and "boot sequence" may be used interchangeably throughout the disclosure. The terms such as "turbo initialization" and "fast booting" may be used interchangeably throughout the disclosure.

As an example, datacenter may typically include a plurality of components including computing devices (e.g., processors, controllers, servers, etc.), security systems, network equipment, data storage systems, management systems, power equipment, etc. The data storage systems may include hardware devices and software (e.g., including computer instructions, computer codes, and/or programs) that enable storage of data within a data center facility. The data storage systems may include storage devices such as hard disk drives (HDD), SSD devices, tape drives, and other internal and external storages. However, the disclosure is not limited thereto, and as, other types of storage devices may be provided. Nowadays, SSDs are the primarily form of storage devices used in the data centers. According to embodiments of the disclosure, the techniques and the methods of the disclosure may be applicable to a wide range of application areas (and/or devices where SSDs are used as means of data storage, and not limited to datacenters.

Generally, an SSD device is a non-volatile data storage device that uses flash-based memory or semiconductor chips to store data. Typically, SSD devices have high read/write speed and faster boot time in comparison to other storage devices such as HDDs. Nowadays, many of the SSD devices adopt Non-Volatile Memory Express (NVMe) protocol, which is a new storage access and transport protocol for next-generation storage devices.

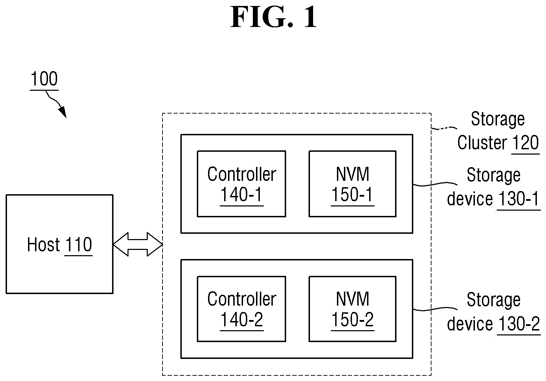

FIG. 1 illustrates a high level block diagram of a storage system 100 according to an embodiment of the disclosure. For example, methods, apparatuses and techniques described in this disclosure may be implemented in the storage system illustrated in FIG. 1. However, the disclosure is not limited thereto, and as such, methods, apparatuses and techniques described herein may be implemented in various other systems or devices according to other embodiments. As shown in FIG. 1, the storage system 100 may include a host device 110 and a storage cluster 120. The host device 110 may be in communication with at least one storage cluster 120 via at least one network. Though in FIG. 1, for simplicity and consistency, only one host device 110 is shown, those of ordinary skill in the art will appreciate that the storage system 100 may include a plurality of host devices in communication with a plurality of storage clusters. According to an embodiment, the host device 110 may be a primary device, which controls and/or facilitates various operations related to data placement and data movement.

The storage system 100 and/or the storage cluster 120 may be a part of a data center facility. The storage cluster 120 may include a plurality of storage devices 130-1, 130-2 (collectively referenced as 130). Each storage device 130 may include a storage controller 140 and a device memory. The device memory may be a Non-Volatile Memory (NVM) 150 150. Each storage device 130 may include a motherboard with multiple Network interface cards (NICs) for receiving data and/or commands from the host device 110. For example, the storage device 130-1 may include a storage controller 140-1 and a NVM 150-1 and the storage device 130-2 may include a storage controller 140-2 and a NVM 150-2. The storage controllers 140-1, 140-2 may be collectively referenced as controller 140 and the NVMs 150-1, 150-2 may be collectively referenced as NVM 150. The network connecting the host device 110 and the storage cluster 120 may include or otherwise cover networks or subnetworks. For example, the host device 110 and the storage devices 130 in the storage cluster 120 may be connected through networks or subnetworks. Each of the networks or the subnetworks may include, for example, a wired or wireless data pathway. The network may include servers, routers, bridges, switches, or other similar equipment used to facilitate communication between the host device 110 and the storage devices 130. Although two storage devices 130 are illustrated in FIG. 1, the disclosure is not limited thereto, and as such, according to another embodiment the number of storage devices may vary.

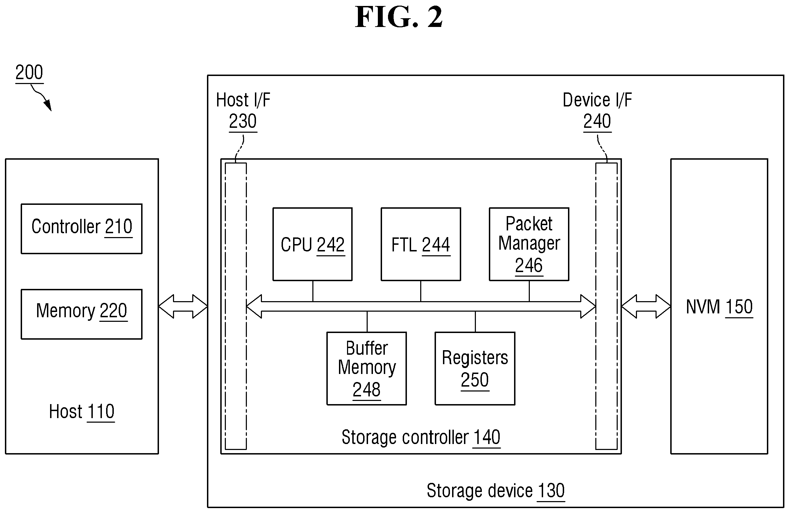

FIG. 2 illustrates a more detailed block diagram of a storage system 200 including a host device 110 and a storage device 130 according to an embodiment. For example, the host device 110 is configured to communicate with the storage device 130 (e.g., an SSD device).

Referring to FIG. 2, the host device 110 may include a host controller 210 and a host memory 220. The host memory 220 may serve as a buffer memory configured to temporarily store data to be transmitted to the storage device 130 or data received from the storage device 130. According to an embodiment, the host device 110 of FIG. 1 may be a mobile or a non-mobile device. The host device may include, but is not limited to, a portable communication terminal (e.g., a mobile phone), a smartphone, a tablet Personal Computer (PC), a wearable device, a healthcare device, an Internet of Things (IOT) device, a Personal Computer (PC), a laptop computer, a server, a media player, or an automotive device (e.g., a navigation device). Further, the host device 110 may include one or more image capturing modules, one or more input modules, one or more output modules, one or more sensors, at least one display, at least one power source, and at least one connecting interface, but not limited thereto. The one or more image capturing modules may include, but is not limited to, a camera or imaging sensor. The one or more input modules may include, but is not limited to, a keyboard, a touch panel, a microphone, a receiver, etc. The one or more output module may include, but is not limited to, a speaker, a transmitter, or a display. The host memory 220 may be a volatile memory, such as Static Random-Access Memory (SRAM) and/or Dynamic RAM (DRAM). However, the disclosure is not limited thereto, and as such, according to another embodiment, the host memory 220 may include another type of memory.

According to an embodiment, the host controller 210 and the host memory 220 may be implemented as separate semiconductor chips. However, the disclosure is not limited thereto, and as such, according to another embodiment, the host controller 210 and the host memory 220 may be integrated in a same semiconductor chip. In this case, a more compact storage system may be provided. As an example, the host controller 210 may be any one of a plurality of modules included in an Application Processor (AP). The AP may be implemented as a System on Chip (SoC). Further, the host memory 220 may be an embedded memory included in the AP or an NVM. However, the disclosure is not limited thereto, and as such, the host memory 220 may be a memory module located outside the AP. The host controller 210 may manage an operation of storing data (e.g., write data) of a buffer region of the host memory 220 in the device memory (e.g., NVM 150) of the storage device 130 or an operation of storing data (e.g., read data) of the device memory (e.g., NVM 150) in the buffer region of the host memory 220. The host memory 220 may include one or more local buffers and a Host Memory Buffer (HMB).

According to an embodiment, the storage device 130 may include at least one device controller and the device memory. The device controller may be a storage controller 140 or a processor, and the device memory may be a Non-Volatile storage media or memory (NVM) 150 configured to store data in response to requests from the host device 110. As an example, the storage device 130 may include at least one of an SSD, an embedded memory, and a removable external memory. In an example case in which the storage device 130 is an SSD, the storage device 130 may be a device that conforms to the NVMe protocol. For example, the storage device 130 may be a device that operates based on the NVMe protocol. However, the disclosure is not limited thereto and in general, the techniques of the disclosure are equally applicable for storage devices which conform to or operate based on any other storage protocol(s) which is/are already existing or which may be developed in future. In an example case in which the storage device 130 is an embedded memory or an external memory, the storage device 130 may be a device that conforms to a Universal Flash Storage (UFS) standard or an Embedded Multimedia Card (eMMC) standard. However, the disclosure is not limited thereto, and as such, the storage device 130 may be implemented based on other types of standards or protocols.

According to an embodiment, the storage device 130 of FIGS. 1-2 may serve as a non-volatile storage device configured to store data regardless of whether power is supplied or not. That is, the storage device 130 may be capable of storing the data even when power to the storage device 130 is turned off. The device memory (e.g., NVM 150) may include a flash memory which may include a 2D NAND memory array or a 3D (or vertical) NAND (VNAND) memory array. As another example, the storage device 130 may include various other kinds of NVMs. For example, the storage device 130 may include Magnetic RAM (MRAM), Spin-Transfer Torque MRAM (STT-MRAM), Conductive Bridging RAM (CB-RAM), Ferroelectric RAM (FRAM), Phase Change RAM (PRAM), Resistive RAM (RRAM), and various other kinds of non-volatile memories. According to an embodiment, the device memory (e.g., NVM 150) may include a plurality of cells, each of the plurality of cells may store a single binary digit or bit of information. In FIG. 2, only one NVM is shown as a part of the storage device 130. However, the disclosure is not limited thereto and in general, the storage device 130 may include a plurality of NVMs each connected the storage controller 140 via one of a plurality of channels.

According to an embodiment, the storage device 130 may be physically separated from the host controller 210 or implemented in a same package as the host controller 210 resulting in a compact storage system. The storage device 130 may be removably coupled with the host device 110 through one or more interfaces (I/F) of the storage controller 140 such as a host interface (e.g., Host I/F 230) and a device interface (or memory interface) (e.g., Device I/F 240). For example, the storage controller 140 may be connected to the host 110 via the Host IF 230 and the storage controller 140 may be connected to the NVM 150 via the Device I/F 240. The host interface 230 and the device interface 240 may be configured to enable exchange of read/write (I/O) requests and data between the host device 110 and the storage device 130. The host interface 230 may be communicatively coupled with the host device 110 and the storage device interface 240 may be communicatively coupled with the device memory (e.g., NVM 150). As an example, the host interface 230 may transmit and receive packets to and from the host device 110. A packet transmitted from the host device 110 to the host interface 230 may include a command or data to be written to the NVM 150. A packet transmitted from the host interface 230 to the host device 110 may include a response to the command or data read from the NVM 150. The device interface 240 may transmit data to be written into the NVM to the NVM 150 or receive data read from the NVM 150. The device interface 240 may be configured to comply with a standard protocol, such as Toggle or Open NAND Flash Interface (ONFI).

According to an embodiment, the device interface 240 may be implemented using various interface technologies, such as Advanced Technology Attachment (ATA), Serial ATA (SATA), external SATA (e-SATA), Small Computer Small Interface (SCSI), Serial Attached SCSI (SAS), Peripheral Component Interconnection (PCI), PCI express (PCIe), NVMe, a Universal Serial Bus (USB) interface, a Secure Digital (SD) card interface, a Multi-Media Card (MMC) interface, an eMMC interface, a UFS interface, an embedded UFS (eUFS) interface, and a Compact Flash (CF) card interface. However, the disclosure is not limited thereto, and as such, the device interface 240 may be implemented with other interface technologies, standards or protocols. According to an embodiment, the host interface 230 may be a PCIe for connecting peripherals. For example, NVMe-based storage device 130 may be connected with the host device 110 using the PCIe host interface.

The storage controller 140 may further include one or more components such as a Central Processing Unit (CPU) 242, a flash translation layer (FTL) 244, a packet manager 246, a buffer memory 248, and one or more registers 250. However, the disclosure is not limited thereto, and as such, according to an embodiment, the storage controller 140 may further include, but is not limited to, an Error Correction Code (ECC) engine, and an Advanced Encryption Standard (AES) engine. The storage controller 140 may further include a working memory in which the FTL 244 is loaded. The CPU 242 may execute the FTL 244 to control data write and read operations on the NVM 150. The FTL 244 may perform various functions, such as an address mapping operation, a wear-leveling operation, and a garbage collection operation. The address mapping operation may be an operation of converting a logical address received from the host device 110 into a physical address used to actually store data in the NVM 150. The wear-leveling operation may be a technique for preventing excessive deterioration of a specific block by allowing blocks of the NVM 150 to be uniformly used. As an example, the wear-leveling operation may be implemented using a firmware technique that balances erase counts of physical blocks. The garbage collection operation may be a technique for ensuring usable capacity in the NVM 150 by erasing an existing block after copying valid data of the existing block to a new block.

The packet manager 246 may generate a packet according to a protocol of an interface, which consents to the host device 110, or parse various types of information from the packet received from the host device 110. In addition, the buffer memory 248 may temporarily store data to be written to the NVM 150 or data to be read from the NVM 150. According to an embodiment, the buffer memory 248 may be a component included in the storage controller 140. However, the disclosure is not limited thereto, and as such, according to another embodiment, the buffer memory 248 may be outside the storage controller 140.

The ECC engine may perform error detection and correction operations on read data read from the NVM 150. For example, the ECC engine may generate parity bits for write data to be written to the NVM 150, and the generated parity bits may be stored in the NVM 150 together with the write data. During an operation of reading of the data from the NVM 150, the ECC engine may correct an error in the read data by using the parity bits read from the NVM 150 along with the read data, and output error-corrected read data. The AES engine may perform at least one of an encryption operation and a decryption operation on data input to the storage controller 140 by using a symmetric-key algorithm.

In a case in which the storage device 130 (e.g., the SSD device) is connected for the first time with the host device 110 and/or in a case in which the storage device 130 goes through different types of resets/restarts, the storage device 130 and the host device 110 may need to follow a series of operations for establishing a functional connection between the storage device 130 and the host device 110. Such series of operations may be referred to as "an initialization sequence" or "a boot sequence". The initialization sequence or the boot sequence may involve a plurality of steps or configuration operations that need to be performed to ensure that the SSD device 130 is in a ready state to send data and/or receive data. The plurality of configuration operations may involve host based configuration operations related to initialization of the storage controller 140 which include memory allocations and configurations of the storage controller 140. In an example, the host based configuration operations may refer to configuration operations performed based on a control or direction of the host. The plurality of configuration operations may be defined by relevant NVMe specifications.

As an example, the plurality of host based configuration operations may include configuring an Admin Queue. For instance, the host device 110 may configure an Admin Queue by setting Admin Queue Attributes (AQA), Admin Submission Queue Base Address (ASQ), and Admin Completion Queue Base Address (ACQ) to appropriate values. The plurality of host based configuration operations may further include determining supported Input-Output (I/O) Command Sets. For instance, the host device 110 may determine supported I/O Command Sets by checking a state of Controller capabilities-Command set supported field (CAP.CSS field) and appropriately initializing Controller Configuration-Command set supported field (CC.CSS field). For example, upon checking that the CAP.CSS bit 7 is set to `1', the host initializes/sets the CC.CSS field to 111b. Upon checking that the CAP.CSS bit 6 is set to '1', the host initializes the CC.CSS field to 110b and upon checking that the CAP.CSS bit 6 is cleared to '0' and bit 0 is set to '1', the host sets the CC.CSS field to 000b. Here, the term "supported" refers to features, elements or components that are supported by the storage device.

The plurality of host based configuration operations may further include configuring settings of the storage controller 140. For example, the host device 110 may configure the settings of the storage controller 140 by selecting arbitration mechanism in CC.AMS and by initializing a memory page size (MPS) in CC.MPS field. The Arbitration Mechanism Supported field in the Controller Capabilities property (CC.AMS) indicates optional arbitration mechanisms supported by the storage controller 140. The plurality of host based configuration operations may further include enabling the storage controller 140 by the host device 110.

The plurality of host based configuration operations may further include creation of I/O queue-pairs based on commands received from the host device 110. The host device 110 may create queues. The number of queues created may be up to the maximum supported by the storage controller 140. For example, a number of queues created is based on system configuration and/or anticipated workload. The I/O queues may be completion queues and/or submission queues. For example, NVMe is based on a paired Submission and Completion Queue mechanism. A Submission Queue is a circular buffer with a fixed slot size that the host device 110 uses to submit commands for execution by the storage controller 140 (e.g., each Submission Queue entry may be a command). According to an embodiment, a Completion Queue may be a circular buffer with a fixed slot size used to post status for completed commands. A completed command is uniquely identified by a combination of an associated Submission Queue identifier and a command identifier that is assigned by the host device 110. As an example, multiple Submission Queues may be associated with a single Completion Queue.

For creation of the I/O queues, the host device 110 may be configured to determine a number of I/O Submission Queues and I/O Completion Queues. For example, in a case in which the storage controller 140 implements I/O queues, the host device 110 may determine the number of I/O Submission Queues and I/O Completion Queues supported using a "Set Features" command. After determining the number of I/O Queues, one or more NVMe Transport specific interrupt registers may be configured. The NVMs transport specific interrupt registers may include Message-Signaled Interrupts (MSI) registers and/or Extended Message-Signaled Interrupts (MSI-X) registers.

In an example case in which the storage controller 140 implements the I/O queues, the host device 110 may allocate an appropriate number of I/O Completion Queues based on a number required for system configuration and a number supported by the storage controller 140. The I/O Completion Queues may be allocated using a Create I/O Completion Queue command. In an example case in which the storage controller 140 implements the I/O queues, the host device 110 may allocate an appropriate number of I/O Submission Queues based on a number required for the system configuration and a number supported by the storage controller 140. The I/O Submission Queues are allocated using a Create I/O Submission Queue command.

For example, the host device 110 may send one or more commands to the storage controller 140 for performing the creation of the completion queues and/or submission I/O queues. The host device 110 may also send one or more commands to the storage controller 140 for performing the deletion of the completion queues and/or submission I/O queues. After receiving the command(s), the storage controller 140 may be configured to process a queue identifier and/or a queue size as indicated in the received one or more commands and perform the creation and/or the deletion of the completion queues and/or submission I/O queues in the host memory 220.

The data corresponding to the execution of the plurality of configuration operations or the execution results of the plurality of configuration operations may be named as "configuration data". After performing the plurality of configuration operations, the storage controller 140 becomes ready to process commands issued by the host device 110. It may be noted that, according to another embodiment, the plurality of configuration operations may include additional configurations operations in addition to the operations defined in the relevant NVMe specifications.

Once the storage device 130 is connected to a host device 110, the connection may remain intact until an issue arises in the storage device 130. In the lifespan of the storage device 130, there can be multiple power cycles (e.g., after system reset, system restarting, etc.) due to various factors. The various factors may include, but is not limited to, the host device (e.g., laptop) going into a sleep mode, power disruptions, server maintenance, etc. According to an embodiment, a power cycle may be defined as an event in which power is turned off to the storage device 130 and then turned on again (e.g., when the system is booted up for the first time or powered up following a reset or restart), or when power is not turned off to the storage device 130 but link and/or controller level reset(s) is/are performed. Here, even in a case there are no changes in the physical connection between the host device 110 and the storage device 130, the host device 110 still needs to reconfigure the storage device 130 (or re-initialize the storage controller 140) after every power cycle. In other words, there is no mechanism to store the configuration data corresponding to one or more of the plurality of repetitive configuration operations and later reload the stored configuration data during a subsequent power cycle.

Thus, the host device 110 and the memory device 130 need to follow the repetitive plurality of configuration operations of the boot sequence (as defined in the relevant NVMe specifications) which involves configuring various settings and parameters within the storage device 130 during every power cycle to ensure proper operation and to establish the functional connection between the storage device 130 and the host device 110. Such initialization process takes significant time (for example, around 3 to 5 seconds) to re-initialize the storage controller 140 for ensuring that the storage device 130 is ready to communicate and perform data operations. Performing such initialization process during every power cycle leads to unnecessary overhead for example, the boot time of the storage device 130 is increased, more computing resources (e.g., processing power) are consumed, and the like. Currently there is no mechanism that allows the host device 110 to skip or to bypass these repetitive operations to enable efficient and quick boot of the storage device 130 (e.g., to reduce the boot time of the storage device 130).

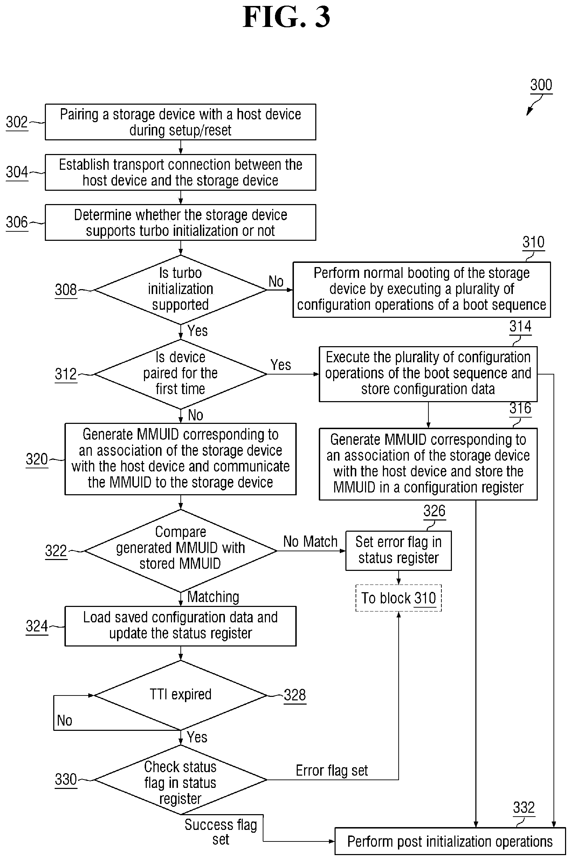

To overcome such limitations, embodiment of the disclosure provide a technique in which the configuration data associated with one or more of the plurality of configuration operations of the boot sequence is stored into a configuration file during a first power cycle. For example, the first power cycle may be when the host device 110 is paired for the first time with the storage device 130. As such, during subsequent power cycles, the host device 110 may skip performing the same one or more configuration operations of the boot sequences which consume considerable time, and reload the configuration data associated with the same one or more configuration operations from the configuration file to reduce the boot time of the storage device 130. Such solution of reducing the boot time of the storage device 130 may be termed as "turbo initialization" or "fast booting" for the storage device 130, as discussed in the following description below with respect to FIG. 3.

According to an embodiment, in order to enable the turbo initialization of the storage device 130, the storage device 130 may be provisioned with the one or more registers 250. The one or more registers may include, but is not limited to, a controller capability register, a custom register, a status register, and a configuration register. In one example, the one or more registers 250 may be included into the storage device 130 as new or custom registers that are provided in addition to pre-registers included in the storage devices for performing normal operations of the storage device 130. However, the disclosure is not limited thereto, and as such, according to another embodiment, the pre-existing registers of the storage device 130 may be utilized to function as the custom register, the status register, and the configuration register. For example, the pre-existing registers of the storage device 130 may be used to serve the purpose of the custom register, the status register, and the configuration register. In order to reduce the boot time of the storage device 130, the storage device 130 should have support for "turbo initialization" feature. The storage device 130 may include whether the storage device 130 supports the turbo initialization feature or not by setting one or more pre-defined bits in the capability register. For instance, the storage device 130 may set one or more bits as "capability bits" to indicate that the turbo initialization feature is supported by the storage device 130. The storage device 130 may also set one or more bits as "TTI bits" to indicate a threshold period or predetermined time (also referred to as "Time to Turbo-initialize" or TTI).

The TTI may indicate a time period that the storage device 130 may take for initialization when the turbo initialization is enabled. The TTI may be included the storage device 130 by a manufacturer of the storage device 130 at the time of packaging of the storage device 130. For example, the TTI may be pre-stored in the storage device 130 at the time of packaging of the storage device 130. In one embodiment, the TTI may be reset/customized by a user of the storage device 130 based on requirements (e.g., the TTI may be communicated through control register(s)). According to an embodiment, setting a bit may mean changing a value of the bit to ` 1' or keeping the value of the bit unchanged when the value of the bit is already '1'. According to an embodiment, resetting a bit may mean changing a value of the bit to '0' or keeping the value of the bit unchanged when the value of the bit is already '0'.

FIG. 3 illustrates a method 300 for reducing the boot time of the storage device 130 according to an embodiment. The method 300 may include operation procedures performed by the storage system 100 to reduce the boot time of the storage device 130. Referring to FIG. 3, in operation 302, the method may include pairing the storage device 130 with the host device 110 during a power cycle. For example, the power cycle may be during system startup or system reset/restart. In operation 304, the method may include establishing a connection the host device 110 and the storage device 130. For example, when the storage device 130 is paired with the host device 110, an NVMe transport connection may be established between the host device 110 and the storage device 130 prior to transfer of any data. As an example, establishing the transport connection may include establishing one or more of a Transmission Control Protocol (TCP) connection, establishing a NVMe-TCP connection, establishing a NVMe-oF connection, and/or other such applicable transport connection between the host device 110 and the storage controller 140 by exchange of one or more parameters/commands.

In operation 306, the method may include determining whether the storage device 130 supports the turbo initialization feature. For example, after establishing the transport connection, the host device 110 may check whether the storage device 130 supports the turbo initialization feature or not. However, the disclosure is not limited thereto, and as such, according to other embodiment, the host device 110 may check whether the storage device 130 supports the turbo initialization feature during or before establishing the transport connection. In order check support for the turbo initialization, the host device 110 may send a request to the storage device 130 (e.g., to the storage controller 140 of the storage device 130), for reading the capability register of the storage device 130. The host device 110 may read the capability register by interacting with the storage controller 140. Upon reading the capability register, the host device 110 determines that the storage device 130 supports the turbo initialization feature based on the one or more bits or the capability bits being set to indicate that storage device 130 supports the turbo initialization. On the other hand, the host device 110 may determine that the storage device 130 does not support the turbo initialization feature, based on the one or more bits or the capability bits not being set.

In operation 308, the method may include proceeding to operation 310, based on a determination that the storage device 130 does not support the turbo initialization feature. In this case, in operation 310, the method may include performing normal booting of the storage device 130. For example, the host device 110 performs normal booting of the storage device 130 by executing the above-discussed plurality of configuration operations of the boot sequence corresponding to a case in which the storage device 130 is paired for the first time with the host device 110. In some embodiments, operation 308 may be combined with operation 306.

In operation 308, the method may include proceeding to operation 312, based on a determination that the storage device 130 supports the turbo initialization feature. In this case, in operation 312, the method may include determining whether the storage device 130 is connected/paired for the first time with the host device 110. For example, the host device 110 may determine whether the storage device 130 is connected/paired for the first time with the host device 110. For example, the host device 110 may use the bus device function to determine whether the storage device 130 is connected/paired for the first time with the host device 110. The host device 110 usually keeps track of the storage devices 130 with which the host has paired in past. As an example, in order to determine whether the storage device 130 is paired for the first time with the host device 110, the host device 110 may compare identification information (e.g., a model number, a serial number, a firmware version, supported capabilities, but not limited thereto) of the storage device 130 with information of previously paired storage devices and whether there is a match, the host device 110 determines that the storage device 130 has been paired before. It may be noted that specific technique for such determination may depend on a storage protocol being used, a type of the host device 110, a type of the storage device 130, but not limited thereto.

In operation 312, the method may include proceeding to operation 314, based on a determination that the host device 110 is paired for the first time with the storage device 130. In this case, in operation 314, the method may include performing normal booting of the storage device 130. For example, in response to determining that the host device 110 is paired for the first time with the storage device 130, the host device 110 may perform the normal booting of the storage device 130 by executing each of the plurality of configuration operations of the boot sequence. Moreover, since the storage device 130 supports the turbo initialization, the host device 110 may further instruct the storage controller 140 to save the configuration data or results of execution of one or more of the plurality of configuration operations into the NVM 150 of the storage device 130. For example, the host device 110 may instruct the storage controller 140 to save the configuration data or results of execution of one or more of the plurality of configuration operations that satisfy a certain criterion. For example, the host device 110 may instruct the storage controller 140 to save the configuration data or results of execution of one or more of the plurality of configuration operations that are repetitive in nature and/or are performed during each power cycle. For example, the host device 110 may instruct the storage controller 140 to save the configuration data into a configuration file which may be stored in the NVM 150 of the storage device 130.

Furthermore, in operation 316, the method may include generating a unique identity or identifier and enable turbo initialization of the storage device 130. For example, the host device 110 may generate a unique identity or identifier and enable turbo initialization of the storage device 130. For example, the host device 110 may use "Set Feature" command with a Custom Feature ID. The unique identity corresponds to the unique association of the storage device 130 (or the storage controller 140) with the host device 110. In one example, the unique identity may be generated before, during or as a part of establishing the transport connection between the host device 110 and the storage controller 140. In another example, the unique identity may be generated after determining that the storage device 130 supports the turbo initialization and optionally, before saving the configuration data into the configuration file. The unique identity may be named as a memory mapping unique identity (MMUID) which may be uniquely associated with the configuration data corresponding to the execution of the one or more of the plurality of configuration operations. MMUID may be associated the configuration data and stored for future use. For example, the MMUID may be used in future (e.g., at a time after the MMUID is associated the configuration data) to fetch or load the configuration data corresponding to the execution of the one or more of the plurality of configuration operations. The host device 110 may generate the unique identity at least based on a unique identifier of the storage device 130 and/or a unique identifier of the host device 110. The host device 110 may encode the generated unique identity and communicate the encoded unique identity to the storage device 130. In one example, the host device may directly communicate the generated unique identity to the storage device 130.

The unique identity so established (e.g., when the storage device 130 is paired for the first time with the host device 110) may be termed as a "pre-configured unique identity" or a "pre-configured MMUID". Upon receiving the pre-configured unique identity, the storage controller 140 may store the pre-configured unique identity into the configuration register of the storage controller 140 or into the NVM 150 of the storage device 130. However, the disclosure is not limited thereto, and as such, the pre-configured unique identity may be stored in another location.

According to an embodiment, during a subsequent power cycle power cycle (e.g., after system resetting, system restarting, etc.), the method may include repeating the operations 302 to 308 for establishing the transport connection with the storage device 130 and determining whether the storage device 130 supports the turbo initialization feature. For example, the host device 110 performs the operations 302 to 308 for establishing the transport connection with the storage device 130 and determining whether the storage device 130 supports the turbo initialization feature. In operation 312, the method may include proceeding to operation 320, based on a determination that the host device 110 is not paired for the first time with the storage device 130. In this case, in operation 314, the method may include generating an identity or MMUID corresponding to the association of the storage device 130 with the host device 110 and communicating the generated identity to the storage device 130. For example, upon determining that the storage device 130 supports the turbo initialization, the host device 110 determines whether the storage device 130 is paired for the first time with the host device 110. Based on determination that the host device 110 is not paired for the first time with the storage device 130, the host device 110 may generate a unique identity or MMUID corresponding to the association of the storage device 130 with the host device 110 and may communicate the generated unique identity to the storage device 130. Here, the host device 110 being not paired for the first time with the storage device 130 means that the host device 110 was previously paired with the storage device. In an example, the generated unique identity may be communicated to the storage device 130 for writing/storing into the configuration register. In an example, the host device 110 may start a timer or TTI timer for a time period. The time period may be predetermined. In an example, the timer is associated with an expiration of the MMUID generated in operation 320.

In operation 322, the method may include comparing generated identity with the pre-configured identify. For example, the storage device 130 may receive the generated unique identity and compare the received unique identity with the pre-configured unique identity stored the storage device 130. In operation 322, the method may include proceeding to operation 324, based on a determination that the received unique identity matches with the pre-configured unique identity. In this case, in operation 324, the method may include loading configuration data corresponding to some or all configuration operations of normal boot sequence of the storage device 130. For example, in response to determining that the received unique identity matches with the pre-configured unique identity, the storage controller 140 may initiate reloading of the configuration data corresponding to some or all configuration operations of the boot sequence so as to reduce the boot time of the storage device 130. In other words, the host device 110 does not have to perform each of the plurality of configuration operations of the boot sequence. For example, the configuration operations which are repetitive in nature and whose configuration data is available from the configuration file stored in the storage device 130. In operation 322, the method may include proceeding to operation 326, based on a determination that the received unique identity does not match with the pre-configured unique identity. In this case, in operation 326, the method may include setting an error flag. For example, in response to determining that the received unique identity does not match with the pre-configured unique identity, the storage controller 140 may set an error flag in the status register.

In operation 324, upon successful reloading of the configuration data, the storage device 130 may set a success flag in the status register. As an example, setting the status flag may include setting one or more success bits of the status register to '1' to indicate successful reloading of the configuration data. In another example, based on the storage controller 140 determining that the received unique identity does not match with the pre-configured unique identity or when reloading of the configuration data is unsuccessful, the storage controller 140 may set an error flag in the status register. As an example, setting the error flag may include setting one or more error bits defined in the status register to '1' or resetting the one or more success bits to '0' to indicate failure in reloading of the configuration data.

In operation 328, the method may include determining whether the TTI or the predetermined time period has expired. For example, the host device 110 determines whether the TTI or the predetermined time period has expired or not. In a case in which the time period expires, in operation 330, the method may include determining whether the storage device 130 has successfully reloaded the configuration data corresponding to the one or more configuration operations from the configuration file. For example, upon expiry of the time period, the host device 110 may read or check a status of the status register to determine whether the storage device 130 has successfully reloaded the configuration data corresponding to the one or more configuration operations from the configuration file. According to an embodiment, operation 328 may be performed simultaneously with operation 324.

According to another embodiment, the host device 110 may poll the status register before the expiry of the predetermined time period (e.g., when the host device 110 is relatively free) to determine whether the storage device has successfully reloaded the configuration data. In a case in which the success flag is set, in operation 332, the method may include performing post initialization operations. For example, when the host device 110 discovers that the success flag is set (e.g., the storage controller 140 has successfully reloaded the configuration data), the host device 110 may perform post initialization operations as defined in the relevant NVMe specifications.

Also, when the host device 110 discovers that the success flag is not set or that the error flag is set (e.g., either when the received unique identity do not match with the pre-configured unique identity or when the storage controller 140 fails to reloaded the configuration data from the configuration file), the host device 110 may perform the normal booting of the storage device 130 by executing each of the plurality of configuration operations of the boot sequence, as defined in operation 310 of FIG. 3.

According to an embodiment, the host device 110 may be configured to disable the turbo initialization feature by resetting the capability bits and/or the TTI bits of the capability register e.g., by disabling bits in the Custom Feature ID which was earlier used to enable the turbo initialization feature. When the host device 110 disables the turbo initialization feature, the storage device 130 may be configured to discard or delete the configuration file or the configuration data stored in the NVM 150 of the storage device 130. According to an embodiment, the host device 110 may update the configuration data stored in the storage device 130 e.g., by performing the normal booting of the storage device 130 by executing each of the plurality of configuration operations and updating the configuration data stored in the storage device 130 with the updated or fresh configuration data. It may be noted that the techniques of the disclosure are equally applicable for any type of storage controllers (e.g., physical and/or virtual controllers).

In this manner, the techniques of the disclosure significantly reduce the bringing up or booting time of the storage devices 130 at each reset/power cycle and improve performance of the storage devices 130 by bypassing some or all of the host driven configuration operations defined in the boot sequence. As an example, the techniques of the disclosure may reduce the boot time of the storage device 130 by more than 99%. Also, such bypassing of the repetitive operations saves bandwidth and computing resources (e.g., processing power) of the host device 110 as well as the storage device 130, and the saved bandwidth and time can be utilized for performing other operations (e.g., for serving read/write requests).

Additionally, the disclosure enables the host device 110 and the storage device 130 to coordinate, where the host device 110 is primarily responsible for performing a full configuration (e.g., memory allocations and/or initialization configurations) during first time pairing of the host and storage devices (e.g., during first power cycle) or whenever any change in configuration is needed. During the subsequent power cycles, the host device 110 may instruct the storage device 130 to restore the full configuration (e.g., memory allocations and/or initialization configurations) from a saved configuration file. The disclosure is not limited to the order of operations illustrated in FIG. 3, and as such, one or more operations illustrated in FIG. 3 may be performed in a different order or simultaneously with other operations according to another embodiment. Also, according to another embodiment, one or more operations illustrated in FIG. 3 may be omitted and combined with other operations. Moreover, according to another embodiment, additional operations may be added to the operations illustrated in FIG. 3.

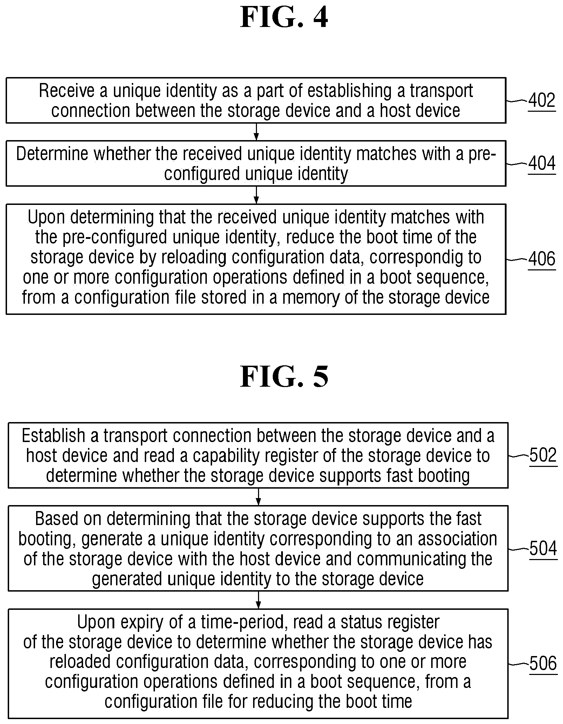

FIG. 4 illustrates a flow chart of a method 400 for reducing boot time of a storage device 130 according to an embodiment. The method 400 may include one or more operational procedures, which may be performed by the storage device 130 (e.g., using the storage controller 140 of the storage device 130 which is communicatively coupled with the NVM 150).

Referring to FIG. 4, in operation 402, the method may include receiving an identity corresponding to an association of the storage device 130 with the host device 110. For example, the method may include receiving, as part of an operation for establishing a transport connection between the storage device 130 and the host device 110, a unique identity. The unique identity corresponds to an association of the storage device 130 with the host device 110.

According to an embodiment, the operation of establishing the transport connection between the storage device 130 and the host device 110 may include determining whether the storage device 130 is paired for a first time with the host device 110. The method may further include, based on determining that the storage device 130 is paired for the first time with the host device 110, receiving the unique identity and saving execution results of the one or more configuration operations defined in the boot sequence into the configuration file. The unique identity may be pre-configured or predetermined. The method may further include storing the configuration file and the unique identity into the memory 150 of the storage device 130. The configuration file and the unique identify may be stored in associated with each other.

According to an embodiment, the one or more configuration operations may include host based (or host dependent) configuration operations related to memory allocation and configuration. Such host based configuration operations may include, but is not limited to, configuring Admin Queue by setting Admin Queue Attributes (AQA), Admin Submission Queue Base Address (ASQ), and Admin Completion Queue Base Address (ACQ) to appropriate values. The configuration operations may further include determining supported I/O Command Sets by checking a state of CAP.CSS field and initializing CC.CSS field. The configuration operations may further include configuring settings of a storage device controller 140 including selecting arbitration mechanism and initializing a memory page size and enabling the storage device controller 140.

The configuration operations may further include determining a number of I/O Submission Queues and I/O Completion Queues supported using a Set Features command and configuring one or more Transport specific interrupt registers including MSI and/or MSI-X registers. The configuration operations may further include allocating an appropriate number of I/O Completion Queues based on a number required for system configuration and a number supported by the storage device controller 140, and allocating an appropriate number of I/O Submission Queues based on a number required for the system configuration and a number supported by the storage device controller 140.

In operation 404, the method may include determining whether the received unique identity matches with a pre-configured unique identity. In operation 406, the method may include, based on determining that the received unique identity matches with the pre-configured unique identity, reloading configuration data, corresponding to one or more configuration operations defined in a boot sequence, from a configuration file stored in a memory 150 of the storage device 130. The boot sequence may include a plurality of configuration operations defined for booting the storage device. Accordingly, the boot time of the storage device may be reduced.

According to an embodiment, the method may further include, based on determining that the received unique identity does not match with the pre-configured unique identity, setting an error flag in a status register of the storage device 130. The error flag may provide an indication to the host device 110 to execute each of the plurality of configuration operations of the boot sequence for booting the storage device 130.

According to another embodiment, the method may further include determining whether reloading of the configuration data corresponding to the one or more configuration operations is successful and in response to determining that the reloading of the configuration data from the configuration file is successful, setting a success flag in a status register of the storage device 130. The method may further include in response to determining that the reloading of the configuration data from the configuration file is unsuccessful, setting an error flag in a status register of the storage device 130. The error flag may provide an indication to the host device 110 to execute each of the plurality of configuration operations of the boot sequence for booting the storage device 130.

According to an embodiment, the method may further include setting one or more bits into a capability register of the storage device 130 to indicate that the storage device 130 is configured to reload the configuration data from the configuration file (e.g., the storage device 130 is configured to support the turbo initialization).

According to an embodiment, the storage device 130 may include an SSD storage device, and the SSD storage device may be configured to use an NVMe interface for communicating with the host device 110.

FIG. 5 illustrates a method for reducing boot time of a storage device 130 according to another embodiment. The method may include different operations performed by the host device 110 (particularly, using the host controller 210 of the host device 110).

In operation 502, the method may include establishing a transport connection between the storage device 130 and the host device 110 and reading a capability register of the storage device 130 to determine whether the storage device 130 supports fast booting.

In operation 504, method may include, based on in determining that the storage device 130 supports the fast booting, generating a unique identity corresponding to an association of the storage device 130 with the host device 110 and communicating the generated unique identity to the storage device 130.

In operation 506, method may include, upon expiry of a predetermined time period, reading a status register of the storage device 130 to determine whether the storage device 130 has reloaded configuration data, corresponding to one or more configuration operations defined in a boot sequence, from a configuration file for reducing the boot time. The boot sequence includes a plurality of configuration operations defined for booting the storage device 130.

According to another embodiment, the method may include may further include determining whether the host device 110 is paired for a first time with the storage device 130 and based on determining that the host device 110 is paired for the first time with the storage device 130, the method may further include generating another unique identity (also referred to as a "pre-configured unique identity") corresponding to an initial association of the storage device 130 with the host device 110, communicating the other unique identity for configuring the storage device 130, and executing each of the plurality of configuration operations of the boot sequence for booting the storage device 130 and instructing the storage device 130 to save execution results of the one or more configuration operations defined in the boot sequence into the configuration file.

According to another embodiment, the method may further include performing normal booting of the storage device 130 by executing each of the plurality of configuration operations of the boot sequence for booting the storage device 130 in response to determining that the storage device 130 does not support the fast booting, that an error flag is set in a status register of the storage device 130; or that the reloading of the configuration data corresponding to the one or more configuration operations is unsuccessful

The operational procedures of methods 400 and 500 may be described in the general context of computer executable instructions. Generally, computer executable instructions can include routines, programs, objects, components, data structures, procedures, modules, and functions, which perform specific functions or implement specific abstract data types.

The order in which the various operations of the operational procedures are described is not intended to be construed as a limitation, and any number of the described operational procedure blocks can be combined in any order to implement the operational procedure. Additionally, individual blocks may be deleted from the operational procedures without departing from the spirit and scope of the subject matter described herein. Furthermore, the operational procedures can be implemented in any suitable hardware, software, firmware, or combination thereof.

The operational procedures described above may be performed by any suitable device or apparatus capable of performing the corresponding operations. The device or apparatus may include various hardware, software or combination thereof, and/or components illustrated in in FIGS. 1 and 2. It may be noted here that the subject matter of some or all embodiments described with reference to FIGS. 1-3 may be relevant for the operational procedures of methods 400 and 500 and the same is not repeated for the sake of brevity. Further, the disclosure has been explained by considering the storage device as NVMe SSDs. However, it may be noted that the teachings of the disclosure are equally applicable for other types of storage devices as well.

According to an embodiment of the disclosure, one or more non-transitory computer-readable media may be utilized for implementing the embodiments consistent with the disclosure. Certain aspects may include a computer program product for performing the operations presented herein. For example, such a computer program product may include a computer readable media having instructions stored (and/or encoded) thereon, the instructions being executable by one or more processors to perform the operations described herein. For certain aspects, the computer program product may include packaging material.

Various components, modules, or units are described in this disclosure to emphasize functional aspects of devices configured to perform the techniques and methods illustrated according various embodiments of the disclosure. However, the various components, modules, or units are not necessarily required to be realized by different hardware units. Rather, according to various embodiments, one or more components, modules, or units may be combined in a hardware unit or provided by a collection of interoperative hardware units, including one or more processors as described above, in conjunction with suitable software and/or firmware.

## Claims

1. A method for booting a storage device comprising:
receiving first identity information as part of a procedure for establishing a transport connection between the storage device and a host device, the first identity information corresponding to an association of the storage device with the host device;
determining whether the first identity information matches second identity information stored in a memory of the storage device; and
based on the first identity information matching the second identify information, loading, from a configuration file related to the second identity information stored in the memory of the storage device, configuration data corresponding to one or more configuration operations related to a boot sequence,
wherein the boot sequence comprises a plurality of configuration operations for booting the storage device.

2. The method as claimed in claim 1, wherein establishing the transport connection between the storage device and the host device comprises:
determining whether the storage device is paired for a first time with the host device;
based on determining that the storage device is paired for the first time with the host device, receiving the second identity information and saving execution results of the one or more configuration operations related to the boot sequence into the configuration file; and
storing the configuration file and the second identity information into the memory of the storage device.

3. The method as claimed in claim 2, wherein the one or more configuration operations comprise host based configuration operations related to memory allocation, wherein the host based configuration operations comprise one or more of:
configuring an Admin Queue by setting Admin Queue Attributes (AQA), Admin Submission Queue Base Address (ASQ), and Admin Completion Queue Base Address (ACQ) to appropriate values;
determining supported Input-Output (I/O) Command Sets by checking a state of Controller capabilities-Command set supported (CAP.CSS) field and initializing Controller Configuration-Command set supported (CC.CSS) field;
configuring settings of a storage device controller comprising selecting arbitration mechanism and initializing a memory page size;
enabling the storage device controller;
determining a number of I/O Submission Queues and I/O Completion Queues supported using a Set Features command and configuring one or more Transport specific interrupt registers comprising Message-Signaled Interrupts (MSI) registers and/or Extended Message-Signaled Interrupts (MSI-X) registers;
allocating an appropriate number of I/O Completion Queues based on a number required for system configuration and a number supported by the storage device controller; and
allocating an appropriate number of I/O Submission Queues based on a number required for the system configuration and a number supported by the storage device controller.

4. The method as claimed in claim 1, further comprising:
based on determining that the first identity information does not match with the second identity information, setting an error flag in a status register of the storage device,
wherein the error flag notifies the host device to execute each of the plurality of configuration operations of the boot sequence for booting the storage device.

5. The method as claimed in claim 1, further comprising:
determining whether the loading of the configuration data corresponding to the one or more configuration operations is successful;
based on determining that the loading of the configuration data from the configuration file is successful, setting a success flag in a status register of the storage device; and
based on determining that the loading of the configuration data from the configuration file is unsuccessful, setting an error flag in a status register of the storage device,
wherein the error flag notifies the host device to execute each of the plurality of configuration operations of the boot sequence for booting the storage device.

6. The method as claimed in claim 1, further comprising:
setting one or more bits into a capability register of the storage device to indicate that the storage device is configured to load the configuration data from the configuration file.

7. The method as claimed in claim 1, wherein the storage device comprise a Solid State Drive (SSD), and wherein the SSD is configured to use a Non-Volatile Memory Express (NVMe) interface for communicating with the host device.

8. A storage device comprising:
a memory; and
a controller communicatively coupled with the memory and configured to:
receive first identity information as part of a procedure for establishing a transport connection between the storage device and a host device, the first identity information corresponding to an association of the storage device with the host device;
determine whether the first identity information matches second identity information stored in a memory of the storage device; and
based on the first identity information matching the second identify information, load, from a configuration file related to the second identity information stored in the memory of the storage device, configuration data corresponding to one or more configuration operations related to a boot sequence,
wherein the boot sequence comprises a plurality of configuration operations for booting the storage device.

9. The storage device as claimed in claim 8, wherein the controller is further configured to:
determine whether the storage device is paired for a first time with the host device;
based on determining that the storage device is paired for the first time with the host device, receive the second identity information and save execution results of the one or more configuration operations related to the boot sequence into the configuration file; and
store the configuration file and the second identity information into the memory of the storage device.

10. The storage device as claimed in claim 9, wherein the one or more configuration operations comprise host based configuration operations related to memory allocation, wherein the host based configuration operations comprise one or more of:
configuring an Admin Queue by setting Admin Queue Attributes (AQA), Admin Submission Queue Base Address (ASQ), and Admin Completion Queue Base Address (ACQ) to appropriate values;
determining supported Input-Output (I/O) Command Sets by checking a state of Controller capabilities-Command set supported (CAP.CSS) field and initializing Controller Configuration-Command set supported (CC.CSS) field;
configuring settings of a storage device controller comprising selecting arbitration mechanism and initializing a memory page size;
enabling the storage device controller;
determining a number of I/O Submission Queues and I/O Completion Queues supported using a Set Features command and configuring one or more Transport specific interrupt registers comprising Message-Signaled Interrupts (MSI) registers and/or Extended Message-Signaled Interrupts (MSI-X) registers;
allocating an appropriate number of I/O Completion Queues based on a number required for system configuration and a number supported by the storage device controller; and
allocating an appropriate number of I/O Submission Queues based on a number required for the system configuration and a number supported by the storage device controller.

11. The storage device as claimed in claim 8, wherein the controller is further configured to:
based on determining that the first identity information does not match with the second identity information, set an error flag in a status register of the storage device,
wherein the error flag notifies the host device to execute each of the plurality of configuration operations of the boot sequence for booting the storage device.

12. The storage device as claimed in claim 8, wherein the controller is further configured to:
determine whether the loading of the configuration data corresponding to the one or more configuration operations is successful;
based on determining that the loading of the configuration data from the configuration file is successful, set a success flag in a status register of the storage device; and
based on determining that the loading of the configuration data from the configuration file is unsuccessful, set an error flag in a status register of the storage device,
wherein the error flag notifies the host device to execute each of the plurality of configuration operations of the boot sequence for booting the storage device.

13. The storage device as claimed in claim 8, wherein the controller is further configured to:
set one or more bits into a capability register of the storage device to indicate that the storage device is configured to load the configuration data from the configuration file.

14. The storage device as claimed in claim 8, wherein the storage device comprise a Solid State Drive (SSD), and wherein the SSD is configured to use a Non-Volatile Memory Express (NVMe) interface for communicating with the host device.

15. A method for booting a storage device comprising:
establishing a transport connection between the storage device and a host device;
reading a capability register of the storage device to determine whether the storage device supports fast booting;
based on determining that the storage device supports the fast booting, generating first identity information corresponding to an association of the storage device with the host device and communicating the first identity information to the storage device; and
upon expiry of a timer, reading a status register of the storage device to determine whether the storage device has loaded configuration data from a configuration file related to the first identity information, the configuration data corresponding to one or more configuration operations related to a boot sequence,
wherein the boot sequence comprises a plurality of configuration operations for booting the storage device.

## Amended claims

### Amended claims in accordance with Rule 137(2) EPC.

1. A method for booting a storage device (130) comprising:
receiving (402) first identity information as part of a procedure for establishing a transport connection between the storage device (130) and a host device (110), the first identity information corresponding to an association of the storage device (130) with the host device (110);
determining (404) whether the first identity information matches second identity information stored in a memory (150) of the storage device (130); and
based on the first identity information matching the second identify information, loading (406), from a configuration file related to the second identity information stored in the memory (150) of the storage device (130), configuration data corresponding to one or more configuration operations related to a boot sequence,
wherein the boot sequence comprises a plurality of configuration operations for booting the storage device (130),
wherein establishing the transport connection between the storage device (130) and the host device (110) comprises:
determining (312) whether the storage device (130) is paired for a first time with the host device (110);
based on determining that the storage device (130) is paired for the first time with the host device (110), receiving the second identity information and saving execution results of the one or more configuration operations related to the boot sequence into the configuration file; and
storing (314) the configuration file and the second identity information into the memory (150) of the storage device (130).

2. The method as claimed in claim 1, wherein the one or more configuration operations comprise host based configuration operations related to memory (150) allocation, wherein the host based configuration operations comprise one or more of:
configuring an Admin Queue by setting Admin Queue Attributes (AQA), Admin Submission Queue Base Address (ASQ), and Admin Completion Queue Base Address (ACQ) to appropriate values;
determining supported Input-Output (I/O) Command Sets by checking a state of Controller capabilities-Command set supported (CAP.CSS) field and initializing Controller Configuration-Command set supported (CC.CSS) field;
configuring settings of a storage device controller (140) comprising selecting arbitration mechanism and initializing a memory page size;
enabling the storage device controller (140);
determining a number of I/O Submission Queues and I/O Completion Queues supported using a Set Features command and configuring one or more Transport specific interrupt registers comprising Message-Signaled Interrupts (MSI) registers and/or Extended Message-Signaled Interrupts (MSI-X) registers;
allocating an appropriate number of I/O Completion Queues based on a number required for system configuration and a number supported by the storage device controller (140); and
allocating an appropriate number of I/O Submission Queues based on a number required for the system configuration and a number supported by the storage device controller (140).

3. The method as claimed in claim 1, further comprising:
based on determining that the first identity information does not match with the second identity information, setting an error flag in a status register of the storage device (130),
wherein the error flag notifies the host device (110) to execute each of the plurality of configuration operations of the boot sequence for booting the storage device (130).

4. The method as claimed in claim 1, further comprising:
determining whether the loading of the configuration data corresponding to the one or more configuration operations is successful;
based on determining that the loading of the configuration data from the configuration file is successful, setting a success flag in a status register of the storage device (130); and
based on determining that the loading of the configuration data from the configuration file is unsuccessful, setting an error flag in a status register of the storage device (130),
wherein the error flag notifies the host device (110) to execute each of the plurality of configuration operations of the boot sequence for booting the storage device (130).

5. The method as claimed in claim 1, further comprising:
setting one or more bits into a capability register of the storage device (130) to indicate that the storage device (130) is configured to load the configuration data from the configuration file.

6. The method as claimed in claim 1, wherein the storage device (130) comprise a Solid State Drive (SSD), and wherein the SSD is configured to use a Non-Volatile Memory Express (NVMe) interface for communicating with the host device (110).

7. A storage device (130) comprising:
a memory (150); and
a controller (140) communicatively coupled with the memory (150) and configured to:
receive first identity information as part of a procedure for establishing a transport connection between the storage device (130) and a host device (110), the first identity information corresponding to an association of the storage device (130) with the host device (110);
determine whether the first identity information matches second identity information stored in a memory (150) of the storage device (130); and
based on the first identity information matching the second identify information, load, from a configuration file related to the second identity information stored in the memory (150) of the storage device (130), configuration data corresponding to one or more configuration operations related to a boot sequence,
wherein the boot sequence comprises a plurality of configuration operations for booting the storage device (130),
wherein the controller (140) is further configured to:
determine whether the storage device (130) is paired for a first time with the host device (110);
based on determining that the storage device (130) is paired for the first time with the host device (110), receive the second identity information and save execution results of the one or more configuration operations related to the boot sequence into the configuration file; and
store the configuration file and the second identity information into the memory (150) of the storage device (130).

8. The storage device (130) as claimed in claim 7, wherein the one or more configuration operations comprise host based configuration operations related to memory (150) allocation, wherein the host based configuration operations comprise one or more of:
configuring an Admin Queue by setting Admin Queue Attributes (AQA), Admin Submission Queue Base Address (ASQ), and Admin Completion Queue Base Address (ACQ) to appropriate values;
determining supported Input-Output (I/O) Command Sets by checking a state of Controller capabilities-Command set supported (CAP.CSS) field and initializing Controller Configuration-Command set supported (CC.CSS) field;
configuring settings of a storage device controller (140) comprising selecting arbitration mechanism and initializing a memory page size;
enabling the storage device controller (140);
determining a number of I/O Submission Queues and I/O Completion Queues supported using a Set Features command and configuring one or more Transport specific interrupt registers comprising Message-Signaled Interrupts (MSI) registers and/or Extended Message-Signaled Interrupts (MSI-X) registers;
allocating an appropriate number of I/O Completion Queues based on a number required for system configuration and a number supported by the storage device controller (140); and
allocating an appropriate number of I/O Submission Queues based on a number required for the system configuration and a number supported by the storage device controller (140).

9. The storage device (130) as claimed in claim 7, wherein the controller (140) is further configured to:
based on determining that the first identity information does not match with the second identity information, set an error flag in a status register of the storage device (130),
wherein the error flag notifies the host device (110) to execute each of the plurality of configuration operations of the boot sequence for booting the storage device (130).

10. The storage device (130) as claimed in claim 7, wherein the controller (140) is further configured to:
determine whether the loading of the configuration data corresponding to the one or more configuration operations is successful;
based on determining that the loading of the configuration data from the configuration file is successful, set a success flag in a status register of the storage device (130); and
based on determining that the loading of the configuration data from the configuration file is unsuccessful, set an error flag in a status register of the storage device (130),
wherein the error flag notifies the host device (110) to execute each of the plurality of configuration operations of the boot sequence for booting the storage device (130).

11. The storage device (130) as claimed in claim 7, wherein the controller (140) is further configured to:
set one or more bits into a capability register of the storage device (130) to indicate that the storage device (130) is configured to load the configuration data from the configuration file.

12. The storage device (130) as claimed in claim 7, wherein the storage device (130) comprise a Solid State Drive (SSD), and wherein the SSD is configured to use a Non-Volatile Memory Express (NVMe) interface for communicating with the host device (110).

13. A method for booting a storage device (130) comprising:
establishing a transport connection between the storage device (130) and a host device (110);
reading a capability register of the storage device (130) to determine whether the storage device (130) supports fast booting;
based on determining that the storage device (130) supports the fast booting, generating first identity information corresponding to an association of the storage device (130) with the host device (110) and communicating the first identity information to the storage device (130); and
upon expiry of a timer, reading a status register of the storage device (130) to determine whether the storage device (130) has loaded configuration data from a configuration file related to the first identity information, the configuration data corresponding to one or more configuration operations related to a boot sequence,
wherein the boot sequence comprises a plurality of configuration operations for booting the storage device (130);
wherein establishing the transport connection between the storage device (130) and the host device (110) comprises:
determining (312) whether the storage device (130) is paired for a first time with the host device (110);
based on determining that the storage device (130) is paired for the first time with the host device (110), receiving second identity information and saving execution results of the one or more configuration operations related to the boot sequence into the configuration file; and
storing (314) the configuration file and the second identity information into a memory (150) of the storage device (130).
